Europäisches Patentamt

European Patent Office

Office européen des brevets

(11) Numéro de publication: **0 045 264**
A2

## DEMANDE DE BREVET EUROPEEN

(21) Numéro de dépôt: 81401213.4

(22) Date de dépôt: 28.07.81

(51) Int. Cl.³: **F 03 D 1/04,** H 02 K 7/18

(30) Priorité: **29.07.80 FR 8016771**

(43) Date de publication de la demande: **03.02.82**
**Bulletin 82/5**

(84) Etats contractants désignés: **AT BE CH DE GB IT LI LU NL SE**

(71) Demandeur: **MEGATEC - INDUSTRIE, 30 rue de Chazelles, F-75017 Paris (FR)**

(72) Inventeur: **Berger, Michel, 7 Clos des Montorelles, F-34140 Meze (FR)**

(74) Mandataire: **Phélip, Bruno et al, c/o Cabinet HARLé & LECHOPIEZ 21, rue de La Rochefoucauld, F-75009 Paris (FR)**

(54) **Générateur électrique actionné par le vent.**

(57) Générateur électrique actionné par le vent. Le générateur comporte un venturi (3, 10), un rotor d'entraînement (7) muni de pales placé à l'étranglement du venturi et dont la partie périphérique constitue le rotor d'un alternateur dont le stator est incorporé à la paroi du venturi. Un générateur complémentaire (17) est de préférence couplé axialement au rotor. Il peut être relié à une batterie d'accumulateurs (20) et agir en stabilisateur de vitesse.

Générateur électrique actionné par le vent.

La présente invention est relative à un générateur électrique actionné par le vent.

On connaît divers types de générateurs d'énergie actionnés par le vent, le plus répandu comportant un rotor à axe horizontal muni de pales, qui entraîne une machine telle qu'une génératrice électrique calée sur le même axe. Il est connu d'améliorer Ie rendement d'un tel générateur en prévoyant un capotage en forme de venturi, les pales étant placées à l'endroit le plus étroit du venturi. Il est connu, par ailleurs, pour obtenir des vitesses de rotation de la machine plus élevées, de prévoir une jante solidaire des extrémités des pales, et qui entraîne la machine par engrènement direct ou à l'aide d'une chaîne ou courroie de transmission. Cette dernière solution permet de placer la machine en dehors de la veine d'air. A la connaissance des inventeurs, elle n'a pas été couplée avec la présence du venturi mentionné plus haut.

Les solutions utilisées jusqu'ici comprennent toutes, d'un côté, une partie destinée à capter l'énergie du vent et, d'un autre côté, une machine destinée à transformer cette énergie, par exemple en électricité, la liaison étant assurée par une transmission soit axiale, soit, plus rarement, latérale.

Un but de la présente invention est de fournir un ensemble intégré, permettant d'abaisser les prix de revient lors d'une fabrication en série.

La présente invention fournit donc un générateur électrique actionné par le vent, du type comportant un venturi, un rotor d'entraînement muni de pales et disposé à la partie rétrécie du venturi, et une génératrice électrique dont le rotor est couplé au rotor d 'entraînement, le rotor de la génératrice portant des aimants permanents ou des électro-aimants dont les pôles défilent devant les pôles du stator de la génératrice, dans lequel les pôles du rotor de la génératrice sont placés à la périphérie du rotor d'entraînement, les deux rotors constituant une pièce tournante unique, et les pôles du stator de la génératrice sont placés dans la paroi du venturi.

Suivant une modalité avantageuse, le rotor entraîne un générateur complémentaire placé en aval dudit rotor, et susceptible d'être mis en action quand la vitesse de rotation du rotor dépasse une valeur fixée à l'avance et, de préférence, le générateur complémentaire est susceptible de fonctionner en moteur pour entraîner le rotor aux faibles vitesses, notamment au démarrage.

L'invention va être décrite plus en détail en s'aidant d'un exemple pratique, non limitatif, de réalisation, illustré par les figures parmi lesquelles :

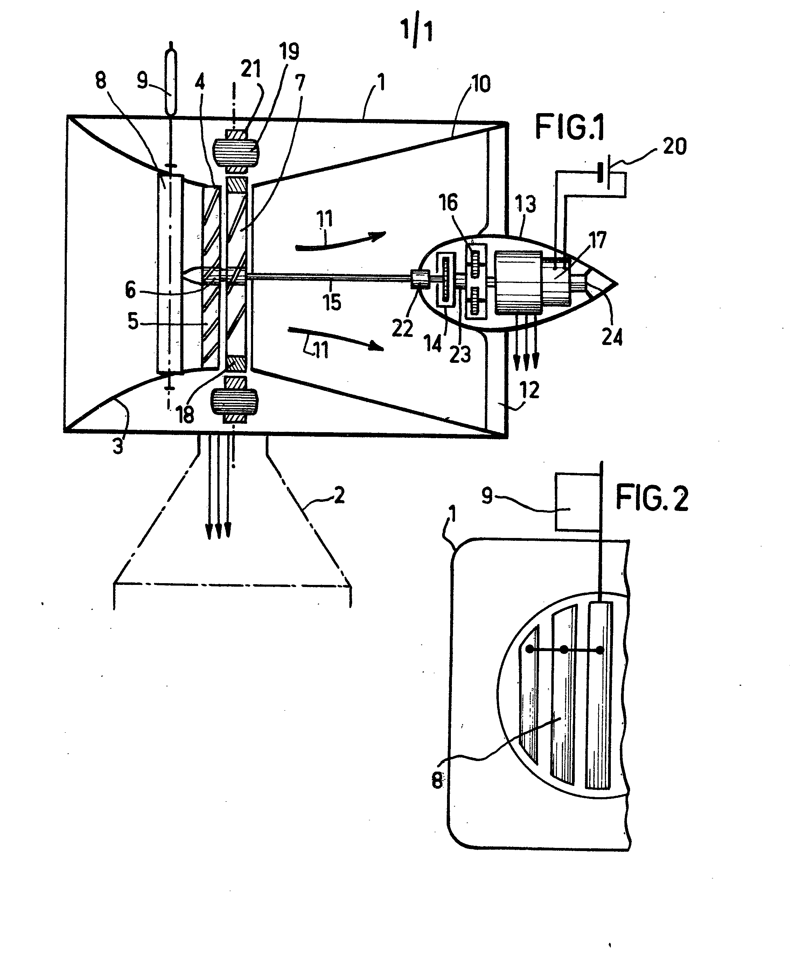

   - Figure 1 est une coupe axiale d'ensemble ;
   - Figure 2 est une coupe transversale selon la ligne II-II de la figure 1.

La turbine aérogénératrice comporte, placée à l'intérieur d'un corps rectangulaire, une enveloppe fixe 1 montée sur un support 2, formée d'une surface conique convergente 3 et d'une surface conique divergente 10, reliées au niveau d'un col circulaire 4 au droit duquel sont disposées les ailettes mobiles 7 constituant l'aubage moteur de la turbine et montées sur un disque mécano-soudé solidaire de l'arbre 15. Le système convergent-divergent assure l'augmentation de la vitesse de l'air capté par l'aérogénérateur et améliore les caractéristiques

3   0045264

aérodynamiques de celui-ci (flèches 11). Au niveau du col du convergent 4 et immédiatement en amont de l'aubage moteur 7, un ensemble d'ailettes fixes 5 solidaires de l'enveloppe de l'aérogénérateur oriente en rotation le flux d'entrée d'air et supporte le palier 6 centrant en amont l'ensemble rotatif de l'aérogénérateur.

Sur l'aubage de la turbine 7 et à la périphérie de celui-ci sont montées des masses magnétiques 18 dont l'entraînement en rotation crée une force électromotrice induite dans des enroulements 19 disposés concentriquement sur la partie fixe de la turbine et bobinés sur un support magnétique extérieur. Les masses magnétiques mobiles peuvent, pour les faibles puissances, être des aimants permanents ou, de façon générale, supporter des bobinages, parcourus par un courant continu, et qui, entraînés par la turbine, créent un champ magnétique tournant et une force électromotrice polyphasée aux bornes des enroulements fixes 19. Lorsque sont prévus des enroulements inducteurs parcourus par un courant continu d'excitation, la variation du courant continu permet d'assurer la modulation de la tension alternative disponible aux bornes des enroulements principaux et éventuellement l'ajustement de sa valeur efficace à une valeur fixe de référence.

De manière générale, l'alternateur polyphasé ainsi mis en oeuvre délivre une tension alternative polyphasée dont la fréquence est proportionnelle à la vitesse de rotation de la turbine, le rapport de proportionnalité étant égal au nombre de paires de pôles mis en oeuvre.

Il est à noter que, dans l'exemple décrit, la turbine ne comporte qu'un étage, mais il est possible de prévoir une turbine à plusieurs étages, ce qui

4 0045264

améliore le rendement, au prix, il est vrai, d'une complication supplémentaire.

La turbine entraîne en outre un générateur électrique complémentaire 17 placé à l'intérieur d'une ogive profilée 13 fixée par des entretoises de centrage 12 placées en sortie du divergent 10.

La position de l'ogive à la sortie du divergent est telle que sa présence n'a pas de répercussion sur l'écoulement de l'air au niveau de la turbine. En outre elle n'occupe qu'une faible partie, moins de 10 %, de la section du venturi à l'endroit où elle est placée.

L'entraînement du générateur complémentaire s'effectue par l'intermédiaire d'un multiplicateur de vitesse 16 de type épicycloïdal et d'un embrayage de type centrifuge 14. Cet ensemble est centré par les paliers 22,23 et 24.

Le générateur complémentaire est une machine à courant continu dont l'excitation est de type "shunt" et dont l'induit est relié à une batterie d'accumulateurs 20 . La vitesse de l'ensemble mobile, au-delà de la vitesse d'embrayage du générateur complémentaire, est donc sensiblement constante, les variations instantanées du régime du vent étant amorties par le courant de charge ou de décharge produit ou consommé par la machine à courant continu fonctionnant ainsi en génératrice ou en moteur. On peut ainsi obtenir de façon simple, au niveau de l'alternateur, un courant et une tension électriques de fréquence sensiblement constante et voisine, par exemple, de la fréquence industrielle de 50 Hz.

Dans une variante, le générateur électrique complémentaire est une commutatrice dont le collecteur de courant continu est relié électriquement à la batterie d'accumulateurs et dont le collecteur de courants alternatifs, généralement triphasés, peut être relié au réseau alimenté par ailleurs par l'alternateur. La commutatrice joue, dans ce cas, à la fois le rôle de stabilisateur de la vitesse de rotation de l'ensemble mobile et de transformateur de courant continu en courant alternatif, au prix, naturellement, d'un coût plus élevé inhérent à ce type de machine électrique plus sophistiquée.

Les modes de fonctionnement du système sont les suivants :

- par vent moyen, l'alternateur, généralement triphasé, est entraîné par la turbine et fournit une puissance alternative, dont la tension alternative peut être réglée à une valeur sensiblement constante par une régulation du courant d'excitation ;

- par vent fort, l'alternateur et le générateur complémentaire sont entraînés par la turbine et fournissent une puissance pratiquement constante, et à un niveau élevé.

Ce système convient donc toutes les fois qu'on désire obtenir, pendant les périodes de vent fort, une vitesse de rotation sensiblement constante.

- par vent faible, si la puissance disponible au niveau de l'alternateur est insuffisante, la commutatrice ou la machine à courant continu, alimentée par cette batterie d'accumulateurs, peut pallier provisoirement le manque de puissance motrice et, fonctionnant partiellement en moteur, assurer la continuité dans la mesure compatible avec la réserve d'énergie de la batterie. A cet effet, l'embrayage centrifuge 14 est du type non réversible, c'est-à-dire que le générateur complémentaire, quand il fonctionne en moteur, entraîne le rotor d'entraînement.

Dans une seconde variante, le générateur complémentaire est un alternateur polyphasé dont la mise en rotation est, au-delà d'une certaine vitesse de rotation correspondant à une force de vent déterminée, assurée par l'embrayage centrifuge, et dont la fréquence et la puissance électrique délivrées varient avec la force du vent instantané dans les mêmes proportions que celles qui caractérisent l'alternateur principal. Au reste, celui-ci et l'alternateur complémentaire peuvent, au-delà de la vitesse d'embrayage centrifuge, être couplés sur le même réseau d'utilisation, à condition que celui-ci s'accomode des variations de fréquence occasionnées par les fluctuations du régime du vent. Ce peut être le cas de résistances de chauffage, par exemple, ou d'électro-pompes à débit variable ou de charge de batteries d'accumulateurs par l'intermédiaire d'un redresseur ou d'un régulateur de tension.

Dans une troisième variante, le générateur complémentaire est constitué par une machine à induction de type asynchrone, à "cage d'écureuil" par exemple. Cette disposition, moins onéreuse que la précédente, présente sensiblement les mêmes caractéristiques d'utilisation. Plus précisément la machine à induction est couplée électriquement avec l'alternateur principal et entraînée à une vitesse supérieure à sa vitesse de synchronisme ; elle fonctionne ainsi en génératrice asynchrone, délivre au réseau d'utilisation une puissance active variable avec la force du vent et consomme une puissance réactive qui lui est fournie par l'alternateur principal.

Les modes d'application de cette troisième variante du dispositif sont sensiblement les mêmes que dans la seconde variante présentée ci-dessus.

Ces variantes permettent donc, sous la réserve ci-dessus concernant la fréquence, une récupération optimale de l'énergie du vent.

Accessoirement, l'ensemble du dispositif décrit ci-dessus comporte des volets d'entrée d'air 8 orientables et obturables par grand vent afin de limiter, dans ces conditions, la puissance développée par l'aérogénérateur ; l'orientation de ces volets peut être automatiquement assurée en fonction de la poussée du vent grâce à l'action d'une palette mobile 9 placée à l'extérieur du dispositif.

Un aérogénérateur conforme à la description précédente présente, dans le domaine aérodynamique, les caractéristiques principales suivantes :

- l'entrée du générateur présente au vent une surface carrée de 16 m² ;

- le diamètre du col circulaire du venturi après une convergence de 25° est de 2,80 m ;

- le diamètre des aubes fixes est légèrement différent de celui des aubes mobiles ;

- l'aubage fixe d'orientation du flux d'air à l'entrée de la turbine, et dont le diamètre est de 2,70 m, comporte 17 ailettes qui servent d'entretoises de liaison entre la partie extérieure et le palier central ;

- l'aubage mobile comporte 12 ailettes inscrites dans un disque mécano-soudé de 2,65 m de diamètre qui supporte mécaniquement les aimants permanents d'excitation de l'alternateur ;

- la sortie, après une divergence de 9°, est la même que celle de l'entrée (16 m²) ;

- la puissance électrique de l'alternateur circulaire pour des vents de 9 m/s à 150 tours/minute

0045264

est de 3,8 KVA ;

  - à 150 tr/min , le générateur complémentaire situé dans le divergent est enclenché ;

  - à 185 tr/min , pour des vents de 12 m/s, la puissance électrique supplémentaire délivrée est de 2,3 KVA, soit une puissance totale de 6,1 KVA .

  Pour une température de 15° C et une pression de 1,033 kg/cm², les puissances motrices disponibles sont les suivantes :

| Vitesse du vent (à l'entrée du convergent) | Puissance motrice totale |
|---|---|
| 5 m/s | 1,27 CV |
| 7 m/s | 3,4 CV |
| 9 m/s | 5,2 CV |
| 12 m/s | 8,3 CV |

  Dans cette gamme de puissances, la vitesse de rotation est comprise entre 135 et 185 tours/minute .

  Lorsque les vitesses atteignent 15 à 20 m/s à l'entrée du convergent, la régulation des volets intervient de manière à ne pas dépasser une vitesse de rotation de 200 tours/minute ;

0045264

REVENDICATIONS

1. Générateur électrique actionné par le vent,
du type comportant un venturi (3, 10),un rotor
d'entraînement (7) muni de pales et disposé à la
partie rétrécie du venturi, et une génératrice
électrique dont le rotor est couplé au rotor
d'entraînement, le rotor de la génératrice portant
des aimants permanents ou des électro-aimants (18)
dont les pôles (18) défilent devant les pôles du
stator de la génératrice,caractérisé en ce que les
pôles du rotor de la génératrice sont placés à la
périphérie du rotor d'entraînement, les deux rotors
constituant une pièce tournante unique, et en ce
que les pôles du stator de la génératrice sont
placés dans la paroi du venturi.

2. Générateur selon la revendication 1, caractérisé en ce que le rotor entraîne un générateur
complémentaire placé vers la sortie du venturi, et
susceptible d'être mis en action quand la vitesse
de rotation du rotor dépasse une valeur fixée à
l'avance.

3. Générateur selon la revendication 2, caractérisé en ce que le générateur complémentaire est
une machine à courant continu dont l'induit est
relié à une batterie d'accumulateurs, et qui peut
fonctionner en générateur ou en moteur selon les
fluctuations de la vitesse du vent, de façon à
stabiliser la vitesse du rotor d'entraînement.

4. Générateur selon la revendication 2, caractérisé en ce que le générateur complémentaire est
une commutatrice dont le collecteur de courant
continu est relié à une batterie d'accumulateurs et
qui peut ainsi jouer à la fois le rôle de stabilisateur de la vitesse du rotor d'entraînement et de
fournisseur de courant alternatif.

5. Générateur selon l'une des revendications 3 ou 4, caractérisé en ce que le rotor d'entraînement est relié au générateur complémentaire par un embrayage centrifuge du type non réversible disposé pour permettre au générateur complémentaire, fonctionnant en moteur, d'entraîner le rotor d'entraînement même à de faibles vitesses.

6. Générateur selon la revendication 2, caractérisé en ce que le générateur complémentaire est un alternateur polyphasé.

7. Générateur selon la revendication 2, caractérisé en ce que le générateur complémentaire est une machine à induction asynchrone à cage d'écureuil et en ce qu'elle est mise en action quand la vitesse de rotation du rotor d'entraînement est supérieure à sa vitesse de synchronisme.

1/1

FIG.1

FIG.2